# EUROPEAN PATENT SPECIFICATION

(11) **EP 4 371 739 B1**
(45) Date of publication and mention of the grant of the patent: **12.08.2026**
(21) Application number: 23208946.6
(22) Date of filing: 10.11.2023
(51) Int. Cl.: B29C 65/02, B29C 65/08, B29C 65/78, B65B 61/20, B65B 29/02

(54) **WELDING UNIT FOR MACHINE FOR FORMING CAPSULES WITH PLEATED CAPSULE BODY**
SCHWEISSEINHEIT FÜR EINE MASCHINE ZUR HERSTELLUNG VON KAPSELN MIT GEFALTETEM KAPSELKÖRPER
UNITÉ DE SOUDAGE POUR MACHINE DE FORMATION DE CAPSULES AVEC CORPS DE CAPSULE PLISSÉ

(30) Priority: 16.11.2022 IT 202200023571
(43) Date of publication of application: 22.05.2024
(73) Proprietor: ICA SPA, 40138 Bologna (IT)
(72) Inventor: Rapparini, Gino, 40138 Bologna (BO) (IT); Generali, Maurizio, 40138 Bologna (BO) (IT)
(74) Representative: Grünecker Patent- und Rechtsanwälte PartG mbB

(56) References cited:
- EP-B1- 3 357 819
- FR-A- 1 333 340

## Description

### TECHNICAL FIELD

The present invention refers to the technology sector of capsules for obtaining beverages. In particular, the present invention refers to the field of capsules with a pleated capsule body.

### BACKGROUND

Certain types of capsules are known for the production of beverages comprising a pleated capsule body which forms the volume for containing the product from which the beverage is derived and which is made of filtering material, for example of paper material. Such filters have the great advantage of being environmentally friendly. However, being made for example of paper material, they have the disadvantage of requiring an additional structural member capable of guaranteeing their stability.

Therefore for example reinforcing rings or small glasses to which such filters are welded are used. In this way, these additional elements guarantee a structural stability to the capsule.

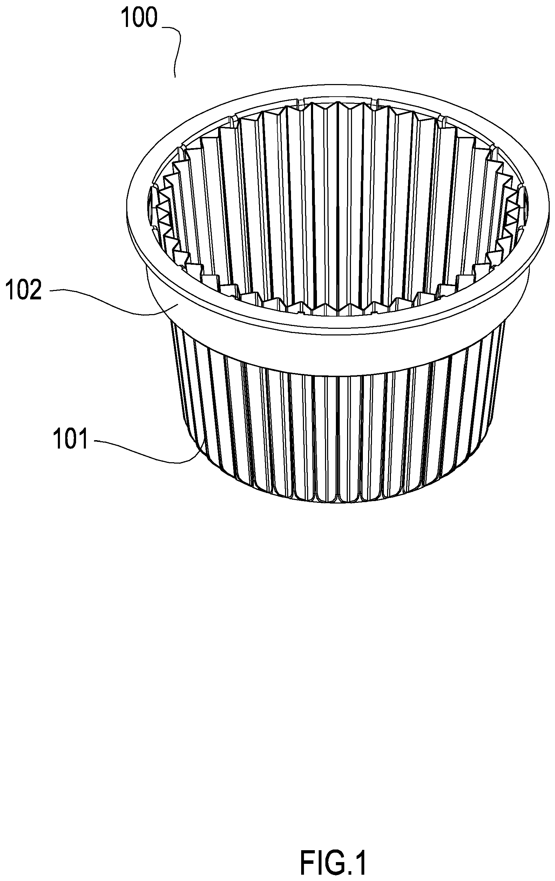

A capsule 100 of this type is shown in Figure 1. The capsule 100 comprises a pleated capsule body 101. The capsule body 101 defines the containing volume of the product from which the beverage is obtained, for example coffee powder, tea leaves or the like. The capsule body 101 has a substantially flat bottom wall and a pleated side wall, i.e. made in regular or irregular folds. The capsule body 101 of the capsule 100 shown in Figure 1 has the shape of a cup.

The advantage of the pleating of the capsule body lies in the increase in the filtering surface of the capsule body compared to capsules with a smooth capsule body of the same size. In addition, the capsules with a pleated capsule body may be particularly appreciated by the consumers for their aesthetic appearance. Examples of capsules with the pleated capsule body are shown in Community design patent EM03311612.

As the capsule body is made of compostable or otherwise flexible material, and having to withstand mechanical operations such as puncturing (to allow a liquid such as water to enter the capsule body), it is necessary to add a reinforcing element that guarantees greater rigidity of the capsule body.

For this purpose, as shown in the figure, reinforcing elements 102 like reinforcing rings are used, inside which the pleated capsule bodies 101 are inserted and fixed.

Examples of reinforcing rings for capsules for the production of beverages can be found in US patent application published under number US 2011/0247975 A1, in PCT application published under number WO 2015/186035 A1 and in US design patents published under numbers US D730,734 S and US D726,006 S.

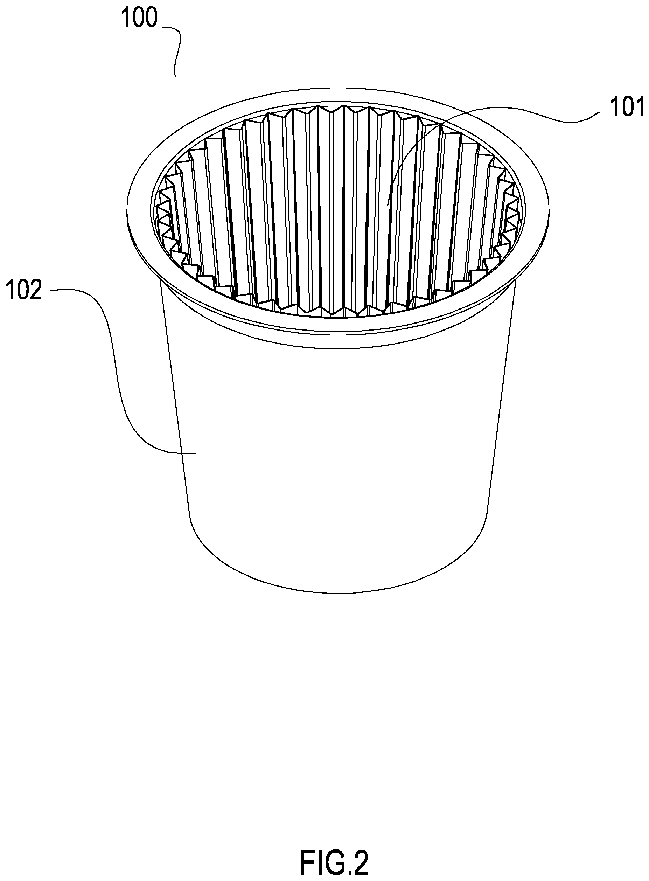

Alternatively, as shown in Figure 2, the reinforcing element 102 may be represented by a container enclosing the pleated capsule body 101, for example a small glass or the like. In the event that the reinforcing element 102 consists of a small glass, this small glass will form an external container with respect to the capsule body 101. Therefore, in such a case, the capsule 100 will be characterized in that it has a capsule body 101 contained inside a container which has the function of being a reinforcing element. The container can advantageously be made of barrier material, for example of oxygen barrier material. The advantage of the container-shaped reinforcing element with respect to the reinforcing ring is to improve the preservation of the organoleptic properties of the product contained in the capsule body 101, in particular in the event that the container is made of barrier material.

An example of a capsule with a capsule body placed inside a container made of barrier material can be found in Figures 14 and 15 of European patent EP 2 490 962 B1.

In both cases the capsule body 101 will be fixed, for example welded or heat-sealed, to the reinforcing element 102 so as to constitute a capsule 100 having greater rigidity and stability than that of the capsule body 101.

In both cases, after having filled the capsule body 101 with the product from which the beverage is obtained, the system can be closed with a lid, for example a lid made of barrier material. The reinforcing element 102 may then also serve to support the lid of the capsule. The lid can be fixed, for example welded, to the reinforcing element.

The realization of capsules with the pleated capsule body normally provides for several successive steps on a single transport and in any case by transporting the pleated capsule body directly inside the reinforcing element.

For example, a plant for the production of single-dose capsules having a waterproof shell 101 is described in European patent EP 2 093 148 B1. In this system, in a first station 3, the pleated capsule body 105 is formed and partially inserted directly into the waterproof shell 101. In a second station 5 the pleated capsule body 105 is totally inserted, positioned and partially welded to the external shell 101 by means of a variable geometry welder 5. As can be seen for example in Figure 12 and Figure 13 of that document, the variable geometry welder 5 comprises three movable welding blocks 50 having welding side faces 51 configured so as to approach the wall of the waterproof shell 101 in such a way as to weld the pleated capsule body 105 to the waterproof shell 101. However, since it is a variable geometry welder, in order to allow welding on the entire circumferential portion of the pleated capsule body, such welding must be done in at least two steps. Indeed, the welding blocks 50 having to move away from each other until they reach the pleated capsule body, when the blocks weld the pleated capsule body 105 to the waterproof shell 101, the welding will be provided only on one part of the circumferential extension.

Therefore, in a third station 6 the pleated capsule body 105 is totally welded to the waterproof shell 101 so as to form a single element. However, this type of embodiment has the great disadvantage of having to transport a filter partially inserted in a waterproof shell that, due to its elasticity and taper, will tend to slip away, penalizing precision and forcing to increase the subsequent operations in order to obtain the desired result. In addition, once the filter has been inserted even partially into the waterproof shell 101, due to the restricted diameter of the latter, the filter will have such a reduced taper that all the groups that will carry out the subsequent operations will have to perform additional movements, often complicated and easy to break, in order to be able to fit into the filter and subsequently widen to avoid moving the filter and carrying out the correct welding.

For example, the fact of having a variable geometry welder is particularly complex since, in order to realize a welding on the entire circumference, it involves dividing the welding process of the circular surface into at least two steps separated by an interval during which the welder makes a rotation around its axis, or this welding must be provided by two welders placed one after the other and offset one with respect to the other. Also with regard to welding, the variable geometry welder has the great disadvantage of having to identify with precision the position in which the first welding has been carried out so that it can carry out the second welding where no welding has yet been carried out.

Another disadvantage of such an embodiment consists in the fact that any lacerations of the filter created during the forming step in the first station 3 are hardly detectable as they can only be seen from the upper open side of the waterproof shell and, even if detected, they result in the filter joined to the waterproof shell being rejected with therefore evident waste of material.

In light of these problems, in European patent EP 3 357 819 B1 a machine and a method have been proposed for the realization of capsules with a pleated capsule body in which the step of fixing the pleated capsule body to the reinforcing element comprises a welding step carried out by means of a fixed geometry welder. A fixed geometry welder is a welder in which the welding surfaces of the welding head of the welder do not move reciprocally, that is, they do not move one with respect to the other.

However, it has been observed that operating with a fixed geometry welder can be complex and ineffective, as small differences in positioning the capsule body, in geometry and/or in positioning the reinforcing element compromise an optimal contact between the welding surfaces and consequently the force necessary for welding.

The problem to be solved is therefore to optimize the realization of capsules comprising a pleated capsule body welded to a reinforcing element, in particular in cases where the welder is a fixed geometry welder.

Even more particularly, the problem to be solved is that of optimizing the welding of the pleated capsule body to the reinforcing element, in particular in the cases where the reinforcing element is a container like the one shown in Figure 2.

### SUMMARY

The present invention is based on the idea of coupling the welding housing, in which the pleated capsule body and the reinforcing element are housed coaxially during welding, to elastic means so that the welding housing is elastically movable by the thrust of the welder and/or elastically deformable by the thrust of the welder.

According to an embodiment of the present invention a welding unit for a machine for forming capsules having a pleated capsule body and a reinforcing element is provided, wherein the welding unit comprises:
- a welding housing configured to accommodate the reinforcing element and the pleated capsule body coaxially during welding;
- a welder, preferably with fixed geometry, coaxial with the welding housing and configured to be inserted inside the welding housing and to weld the reinforcing element to the pleated capsule body,

where the welding housing acts as a counter element for the welder during welding,
the welding unit further comprising:
   - elastic means coupled to the welding housing in such a way that the welding housing is elastically movable and/or elastically deformable by the thrust of the welder.

Within the scope of the present invention, the term "deformable" does not only mean the variation of the shape but can also refer to the sole variation of at least one dimension of the welding housing. For example, the cavity of the welding housing in which the reinforcing element and the pleated capsule body are housed could have a truncated cone shape and by the term "deformable" it can be meant that at least one diameter of the truncated cone can be varied, for example increased, even if the overall truncated cone shape of the cavity remains unchanged. Consequently, within the scope of the present invention when referring to the fact that the welding housing is deformable it is meant that the shape and/or at least one or more of the dimensions of the welding housing are susceptible to undergo variations.

Based on the present invention, therefore, at least one or more of the position of the welding housing, its shape or one of its dimensions is variable.

The term "elastically" means that the variation of the position and/or of the shape and/or of at least one of the dimensions of the welding housing is reversible, that is, it disappears when the stress by the thrust of the welder ceases.

The possibility of making these elastic variations of the welding housing as a result of the stress due to the thrust of the welder is particularly advantageous because it allows the welding housing to be adapted to the welder automatically, that is, directly by the thrust exerted by the welder on the welding housing. In this way, the precision of the welding is increased optimizing the welding since the capsule body and the reinforcing element are welded optimally even if, initially, they are not optimally positioned in the reinforcing housing with respect to the head of the welder.

In addition, by adjusting the properties of the elastic means, the welding force can be adjusted, for example, increased or decreased based on the elasticity coefficient of the elastic means.

Since the elastic variation occurs by the thrust of the welder on the welding housing, the welding force can also be adjusted based on the thrust exerted by the welder.

Within the scope of the present invention, the thrust exerted by the welder that causes the elastic variation of the welding housing can be exerted both by acting exclusively on the welder, that is, by pushing the welder towards the welding housing, and by acting exclusively on the welding housing, that is, by pushing the welding housing towards the welder, and by acting on both, that is, by pushing the welding housing and the welder against each other.

In the event that the welding housing is elastically movable, it is therefore floating and can easily adapt to the position of the welder, increasing and guaranteeing the welding precision.

In the event that the welding housing is elastically deformable, it can easily adapt to the dimension and/or shape of the head of the welder, increasing and guaranteeing the welding precision.

According to a preferred embodiment, the welder is with fixed geometry. Within the scope of the present invention, a fixed geometry welder is a welder in which the welding surfaces of the welding head of the welder do not move reciprocally, i.e. they do not move one with respect to the other.

Preferably, the welding unit according to the present invention is used in cases where the reinforcing element is a container enclosing the pleated capsule body, for example a small glass like the one schematically shown with reference numeral 102 in Figure 2.

According to a further embodiment of the invention, a welding unit is provided, wherein, during a welding step, as a result of the elastic movement of the welding housing and/or as a result of the elastic deformation of the welding housing, at least one diameter of the welding housing coincides with at least one diameter of the welder along a welding zone so as to weld the capsule body to the reinforcing element at said diameters. The welding zone can have, for example, a ring shape, i.e. define a ring along the entire perimeter of the capsule body and of the reinforcing element.

In the welding zone, the capsule body and the reinforcing element have substantially the same diameter (i.e. apart from the thickness of the capsule body). Thanks to the elastic variation of the welding housing by the thrust of the welder, the weld is exactly at the same diameters of the welding housing and of the head of the welder, thus guaranteeing the precision of the welding.

According to a further embodiment of the invention, a welding unit is provided, wherein the elastic means are configured to elastically vary the position of the welding housing along the axis where the welder and the welding housing are coaxial, for example the elastic means are placed below the welding housing with respect to the welder. For example, there may be an elastic variation in the vertical position of the welding housing and therefore in the vertical distance between the welding housing and other components of the system. In this way, the welding force can be easily adjusted based on the thrust exerted by the welder along the direction of the axis where the welder and the welding housing are coaxial.

According to a further embodiment of the invention, a welding unit is provided, wherein the elastic means are configured to elastically vary the position of the welding housing in a plane perpendicular to the axis where the welder and the welding housing are coaxial. This further increases the welding precision as it increases the number of degrees of freedom of the welding housing that can be elastically varied by the thrust exerted by the welder. In this way, the position of the welding housing, and therefore of the capsule body and of the reinforcing element that are housed therein, is automatically adjusted in various directions in 3D space.

According to a further embodiment of the invention, a welding unit is provided, wherein the elastic means are configured to elastically vary at least one diameter of the welding housing, for example the elastic means are positioned laterally with respect to the welding housing. The elastic means can for example be configured to vary at least one diameter of the cavity of the welding housing in which the capsule body and the reinforcing element are housed during welding. It can therefore be guaranteed that the welding takes place exactly in the position where the diameter of the head of the welder coincides with the diameter of the capsule body and of the reinforcing element in the welding zone, increasing the welding precision.

According to a further embodiment of the invention, a welding unit is provided, wherein the elastic means comprise one or more springs. The springs may for example be one, two, three or more. The use of the springs is particularly advantageous since the elastic behaviour of the springs is easily adjustable and predictable. The precision of the system can thus be easily optimized. In addition, the springs are reliable and easily available elastic means.

According to a further embodiment of the invention, a welding unit is provided, wherein the elastic means comprise at least one circlip placed in the welding housing so that at least one diameter of the welding housing is elastically variable due to the elastic deformation of the circlip. Preferably, the welding unit comprises a pair of circlips placed in the welding housing so that at least one diameter of the welding housing is elastically variable due to the elastic deformation of the circlips. The circlips are rings made of elastic material whose circumference is not complete, thus having a cut. The diameter of the circlips is elastically variable. In the event that the system is provided with a pair of circlips it is preferable that the two circlips are oriented so that the respective cuts do not match, but are offset, preferably by 180°. In this way, it can still be guaranteed that at the pair of circlips the welding perimeter is continuous, that is, without interruptions since, at the interruption or cut of the first circlip of the pair, the second circlip has no interruptions and, vice versa, at the interruption or cut of the second circlip of the pair, the first circlip has no interruptions. The circlips are reliable and easily available elastic means that allow to elastically vary at least one diameter of the welding housing in a simple and accurate way.

According to alternative embodiments of the invention, the elastic means may comprise pneumatic devices which, when the actuation pressure varies, vary the force without changing the thrust of the welder.

According to a further embodiment of the invention, a welding unit is provided, further comprising suction means configured to suck the interior of the welding housing so as to retain the reinforcing element in the welding housing. This allows to guarantee the positioning of the reinforcing element during various steps of the process. For example, the reinforcing element may be retained in position thanks to the suction inside the welding housing in the step in which the welding housing and the welder approach in order to let the head of the welder enter into the welding housing. In addition, the reinforcing element can also be retained during the welding itself.

According to a further embodiment of the invention, a welding unit is provided, further comprising actuating means configured to move the welding housing and/or the welder so as to insert the welder into the welding housing. The actuating means could operate on one or both of the welding housing and the welder. The actuating means can therefore guarantee the reciprocal movement of the welding housing and of the welder so as to move them closer together and move them away in order to be able to perform the welding and then to be able to extract the formed capsule.

According to a further embodiment of the invention, a machine for forming capsules having a pleated capsule body and a reinforcing element is provided, the machine comprising one or more welding units according to any one of the preceding embodiments. The machine could for example comprise a plurality of welding units, for example two, three, four, five, six or more welding units. The various welding units could operate synchronously, so as to simultaneously form a plurality of capsules, in particular a number of capsules equal to the number of welding units.

The machine according to an embodiment of the present invention may further comprise a forming station configured to form the pleated capsule body, for example starting from a film coming from a reel. Alternatively, the machine according to the present invention may be configured to receive the pleated capsule body formed previously and/or separately from another machine, for example from a reservoir or reserve of pleated capsule bodies.

The machine according to an embodiment of the present invention may further comprise a forming station configured to form the reinforcing element. Alternatively, the machine according to the present invention may be configured to receive the reinforcing element formed previously and/or separately from another machine, for example from a reservoir or reserve of reinforcing elements.

The machine according to an embodiment of the present invention may further comprise a filling station configured to fill the formed capsules with the product from which the desired beverage is obtained and a sealing station for closing the filled capsules, for example by means of a lid applied to the reinforcing element. Alternatively, the machine according to an embodiment of the present invention may be configured to supply the formed but still empty capsules. These capsules can then be supplied to a further machine for filling and closing.

According to a further embodiment of the invention, a linear type machine is provided.

According to a further embodiment of the invention, a machine is provided comprising transport housings configured to position the pleated capsule body and the reinforcing element so that they are coaxial with each other and with respect to the welding housing and to the welder. The transport housings therefore position the pleated capsule body and the reinforcing element at the welding unit so that at the welding unit the capsule body, the reinforcing element, the welding housing and the welder are coaxial or substantially coaxial. Any deviations from the perfect coaxiality can be advantageously corrected thanks to the possible elastic variations of the welding housing based on the present invention.

According to a further embodiment of the invention, a machine is provided wherein the transport housings are arranged between the welding housing and the welder along the axis of coaxiality.

According to a further embodiment of the invention, a machine is provided wherein the transport housings comprise first transport housings for transporting the pleated capsule body and second transport housings for transporting the reinforcing element.

The first transport housings can be configured to transport the pleated capsule body from the station for forming the same to the welding unit. Alternatively, the first transport housings may be configured to transport the pleated capsule body from an input station of the machine to which previously formed pleated capsule bodies are supplied to the welding unit. If the machine comprises a plurality of welding units, the first transport housings may be configured to transport to the welding unit simultaneously a number of capsule bodies equal to the number of welding units.

The second transport housings may be configured to transport the reinforcing element from an input station of the machine to which previously formed reinforcing elements are supplied. If the machine comprises a plurality of welding units, the second transporting housings may be configured to transport to the welding unit simultaneously a number of reinforcing elements equal to the number of welding units.

The first and second transport housings may be configured to operate synchronously, for example by means of a suitably programmed control unit.

According to a further embodiment of the invention, a machine is provided wherein the transport housings are further configured to accommodate the pleated capsule body and the reinforcing element during welding and to transport the capsule after the welding step has been completed. This makes it possible to realize a simple and particularly compact machine, in which various steps of capsule formation are performed in the same housing, thus avoiding the need to transfer the capsule or its components from one housing to another.

Preferably, the first transport housings and the second transport housings are arranged between the welding housing and the welder along the axis of coaxiality so that the first transport housings face towards the welder and the second transport housings face towards the welding housing.

According to a further embodiment of the present invention, a method for refurbishing a machine for forming capsules having a pleated capsule body and a reinforcing element is provided, the method comprising the step of providing the machine with one or more welding units according to any one of the embodiments defined above. According to this embodiment, it is possible to improve and therefore to renew pre-existing machines, optimizing the welding of the pleated capsule body to the reinforcing element by means of welding units based on embodiments of the present invention. According to embodiments of the present invention, machines of the linear type can be improved. According to further embodiments of the invention, drum-type machines can be refurbished, such as for example machines like the one described in European patent EP 3 357 819 B1, or carousel-type machines.

According to a further embodiment of the present invention, a method for refurbishing a machine for forming capsules having a pleated capsule body and a reinforcing element is provided, the machine comprising one or more welding units, each comprising:
- a welding housing configured to accommodate said reinforcing element and said pleated capsule body coaxially during welding;
- a welder, preferably with fixed geometry, coaxial with respect to said welding housing and configured to be inserted within said welding housing and to weld said reinforcing element to said pleated capsule body,

wherein said welding housing acts as a counter element for said welder (520);
wherein the method comprises the following step:
   providing said welding housing with elastic means so that said welding housing is elastically movable and/or elastically deformable by the thrust of said welder.

Based on this embodiment, it is possible to improve and therefore to renew pre-existing machines, by providing the welding housings of such machines with elastic means that allow to elastically vary at least one of the position, the shape and the dimension of the welding housings by the thrust of the welder.

The precision and the reliability of the welding of the pleated capsule body to the reinforcing element are therefore optimized, in particular in cases where the reinforcing element is a container enclosing the pleated capsule body.

### BRIEF DESCRIPTION OF THE DRAWINGS

The present invention will be described with reference to the accompanying figures in which the same reference numerals and/or signs indicate the same and/or similar and/or corresponding parts of the system. In the Figures:
Figure 1 schematically illustrates an external three-dimensional view of a capsule having a pleated capsule body and a reinforcing ring;
Figure 2 schematically illustrates an external three-dimensional view of a capsule having a pleated capsule body and a reinforcing container enclosing the pleated capsule body;
Figure 3 schematically illustrates a sectional view of a welding unit according to a particular embodiment of the present invention in an operating step of a machine for forming capsules like those of Figure 2;
Figure 4 schematically illustrates a sectional view in a subsequent operating step with respect to that of Figure 3;
Figure 5 schematically illustrates a sectional view in a subsequent operating step with respect to that of Figure 4;
Figure 6 schematically illustrates a sectional view in a subsequent operating step with respect to that of Figure 5;
Figure 7 schematically illustrates a sectional view in a subsequent operating step with respect to that of Figure 6;
Figure 8 schematically illustrates a three-dimensional view of a machine for forming capsules according to a particular embodiment of the present invention;
Figure 9 schematically illustrates a sectional view of a welding unit according to a further embodiment of the present invention in an operating step of a machine for forming capsules like those of Figure 2;
Figure 10 schematically illustrates a sectional view in a subsequent operating step with respect to that of Figure 9.

### DETAILED DESCRIPTION

In the following, the present invention is described with reference to particular embodiments as illustrated in the accompanying drawing tables. However, the present invention is not limited to the particular embodiments disclosed in the following detailed description and depicted in the figures, but rather the disclosed embodiments merely exemplify the various aspects of the present invention, the scope of which is defined by the claims. Further modifications and variations of the present invention will be apparent to the skilled person.

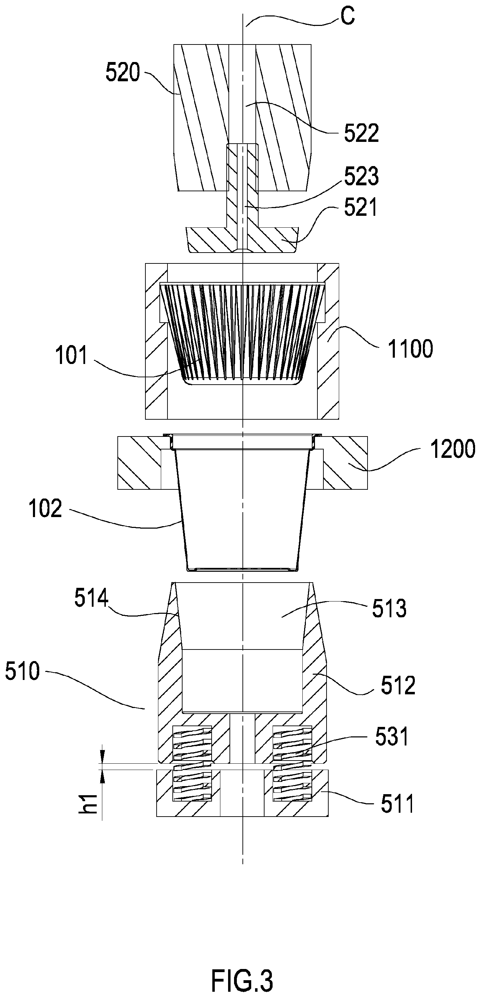

Figure 3 schematically illustrates a sectional view of a welding unit according to a particular embodiment of the present invention in an operating step of a machine for forming capsules like those of Figure 2.

Figure 3 shows that the pleated capsule body 101 is housed in the first transport housing 1100 of the machine.

The first transport housing 1100 is similar to the housing 131 described in European Patent EP 3 357 819 B1.

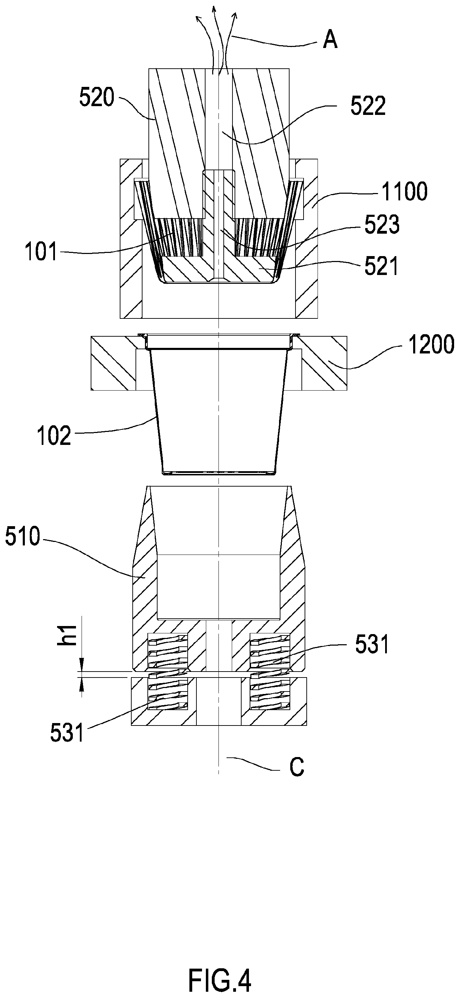

The machine according to the present invention could further comprise a station for forming pleated capsule bodies like the one described in European patent EP 3 357 819 B1, in particular with reference to Figures 4, 5 and 6 of this patent.

The reinforcing element 102, consisting of a container suitable for enclosing the capsule body 101, is housed in the second transport housing 1200 of the machine.

The first transport housing 1100 and the second transport housing 1200 are positioned so that the capsule body 101 and the reinforcing element 102 are coaxial. In particular, the figure shows the axis of coaxiality C which coincides with the axis of symmetry of the capsule body 101 and with the axis of symmetry of the reinforcing element 102.

Figure 3 also shows the welding housing 510 and the welder 520 of the welding unit. Also the welding housing 510 and the welder 520 are coaxial. In particular, in the operating step shown in the figure, they are also coaxial with the capsule body 101 and the reinforcing element 102 along the axis of coaxiality C.

The first transport housing 1100 and the second transport housing 1200 are interposed between the welding housing 510 and the welder 520 along the axis C.

The welder 520 is of the fixed geometry type. The welding surfaces of the welding head of the welder 520 therefore do not move reciprocally, that is, they do not move one with respect to the other. In particular, the welder 520 shown in the figure is similar to the welder 160 shown in European patent EP 3 357 819 B1

The welder 520 is connected to a pusher 521 that can be translated in the vertical direction so as to vary the positioning of the pleated capsule body 101 with respect to the welder 520 and thus varying the final positioning with respect to the reinforcing element 102. This configuration therefore also makes it possible to position pleated capsule bodies 101 having different heights. In fact, in the event that one has a pleated capsule body 101 having a different dimension or it is wished to adjust the positioning of the reinforcing element 102 with respect to the pleated capsule body, one just needs to adjust the positioning of the pusher 521.

The welder 520 has an internal opening 522 in which the pusher 521 is inserted. The pusher 521 has in its inside an opening 523 configured so as to connect the atmosphere below the pusher 521 with the internal opening 522 of the welder 520. In this way it is thus possible for example to suck air from the lower zone of the pusher 521 thanks to the suction of air from the internal opening 522 of the welder 520.

The welding housing 510 comprises a first portion 511 and a second portion 512. The first portion 511 and the second portion 512 are elastically coupled by means of the elastic means 531. In the figure, it is shown that the elastic means 531 comprise two springs 531. However, the type and the number of elastic means coupling the first and second portion of the welding housing is variable. For example, the elastic means could comprise one, two, three, four or more springs. The elastic means 531 are housed in special housings made both in the first portion 511 and in the second portion 512 of the welding housing 510.

As can be seen in the figure, in a balanced condition, that is, without any stress being exerted on the welding housing and thus on the elastic means 531, the first portion 511 is at a distance h1 from the second portion 512 along the axis C. The distance h1 could be in the range from 1 mm to 20 mm, preferably equal to 5 mm.

The second portion 512 comprises a cavity 513 inside which the reinforcing element 102 and the capsule body 101 are housed during welding. The upper portion of the cavity, i.e. the portion facing towards the opening of the cavity, has a truncated cone shape, i.e. it has inclined side walls 514.

Figure 4 schematically illustrates a sectional view in a subsequent operating step with respect to that of Figure 3.

In this step the welder 520 is moved downwards so as to meet the pleated capsule body 101. By sucking air A from the internal opening 522 of the welder 520, the pleated capsule body 101 is captured by the pusher 521. In this way, the lower surface of the pusher 521 will position itself in contact with the internal lower surface of the pleated capsule body 101. For this reason, the lower part of the pusher 521 preferably has a truncated cone shape so as to effectively combine with the lower part of the pleated capsule body 101.

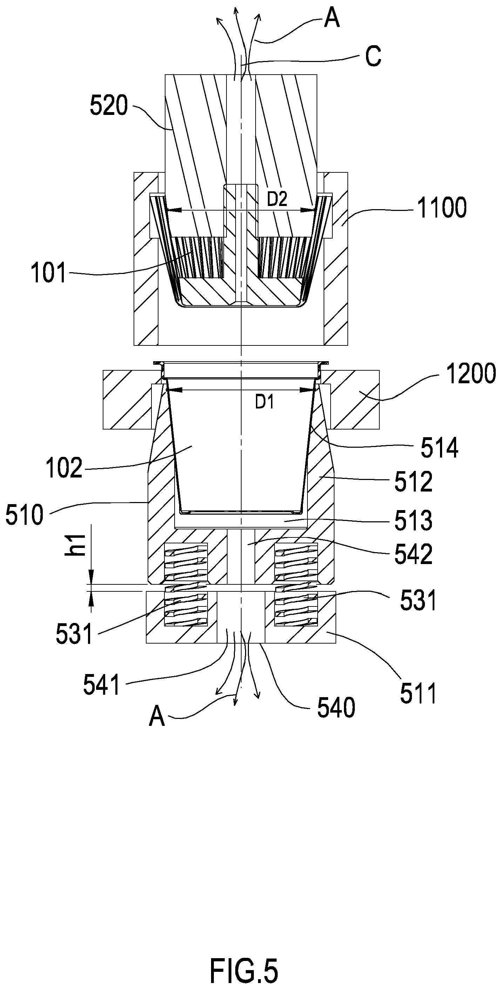

In the subsequent step shown in Figure 5, the welding housing 510 is translated upwards along the axis C so as to receive the reinforcing element 102 inside the housing cavity 513. As can be seen in the figure, advantageously, the inclination of the side walls 514 of the cavity corresponds to the inclination of the reinforcing element so as to improve the grip of the reinforcing element inside the cavity 513.

Furthermore, air is sucked from the interior of the cavity 513 by means of suction means 540 so as to firmly retain the reinforcing element in the cavity 513. In the embodiment shown in the figure, the suction means 540 comprise internal openings 541 and 542 in the first and second portion 511 and 512, respectively, of the welding housing communicating with each other and with the cavity 513. The suction of air from the interior of the cavity 513 can however be done in various ways, for example by means of an opening made in the side wall of the second portion 512 and directly communicating with the cavity 513.

Figure 5 also shows that the translation of the welding housing 510 along the axis C is such that the reinforcing element 102 is raised with respect to the second transport housing 1200 and therefore at least partially removed from the second transport housing 1200. For example, the reinforcing element could be raised by 2 - 10 mm, preferably by 4 mm, with respect to the second transport housing.

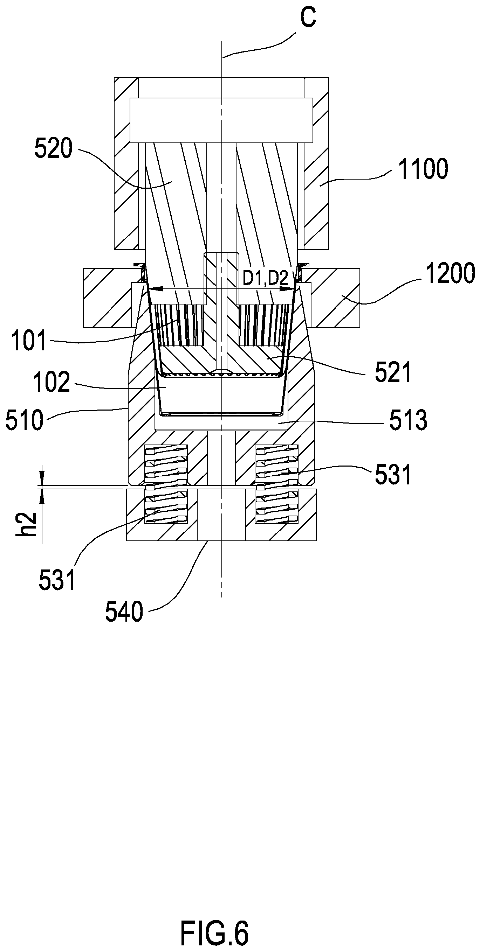

Thereafter, as shown in Figure 6, the pleated capsule body 101 is pushed by the welder 520 and by the pusher 521 towards the reinforcing element 102 until it enters into the reinforcing element 102.

As shown in the figure, the welding housing 510 acts as a contrast element for the welder 520 in this step.

In particular, by the thrust of the welder 520, the elastic means 531 are compressed and the distance h2 between the first and second portion of the welding housing 510 is reduced compared to the distance h1 of Figures 3, 4 and 5. Furthermore, it can be seen that by the thrust of the welder and of the compression of the elastic means, the reinforcing element 102 is inserted again in the second transport housing 1200, after having been raised as previously shown in Figure 5.

As described above, the possibility of this elastic variation of the position of the welding housing 510 by the thrust of the welder 520 is particularly advantageous to optimize the quality of the welding.

In particular, as a result of the elastic variation of the position of the welding housing 510 by the thrust of the welder 520, the position of the welding housing 510 and therefore of the reinforcing element 102 and of the capsule body 101 that are contained therein automatically adapts to the position of the welder 520 guaranteeing the welding precision.

In particular, as can be seen in the figure, as a result of the elastic movement of the welding housing, the diameter D1 of the welding housing coincides with the diameter D2 of the welder along a welding zone so as to weld the capsule body to the reinforcing element at the diameters D1 and D2. The welding zone can have, for example, a ring shape, i.e. define a ring along the entire perimeter of the capsule body and of the reinforcing element. Also the diameters of the reinforcing element 102 and the capsule body 101 coincide in the welding zone.

Welding can be carried out for example by means of a hot bar or by means of other technologies such as ultrasounds or induction.

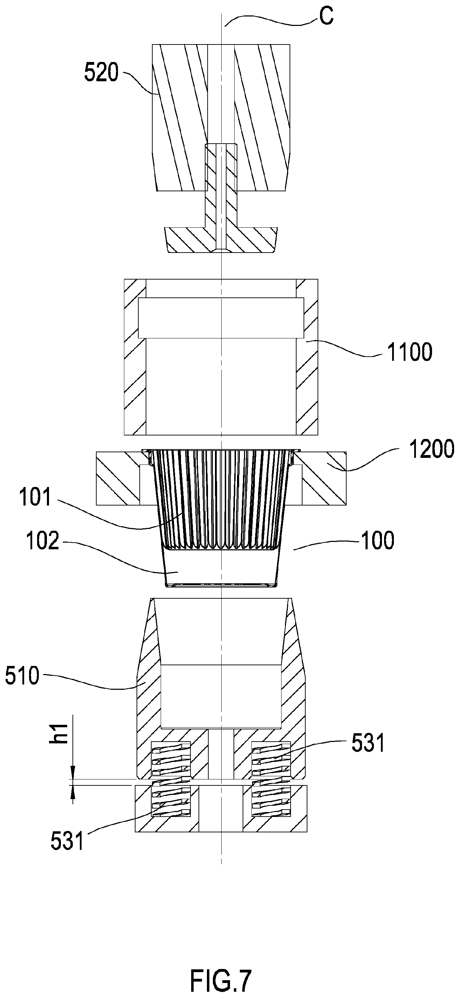

At the end of the welding process, the air suction step A is interrupted both by the opening 522 of the welder 520, and by the cavity 513 of the welding housing. In this way, the capsule 100 formed from the pleated capsule body 101 welded to the reinforcing element 102 can be released and the welder 520, the pusher 521 and the welding housing 510 can return to the starting position, as shown in the front view of Figure 7.

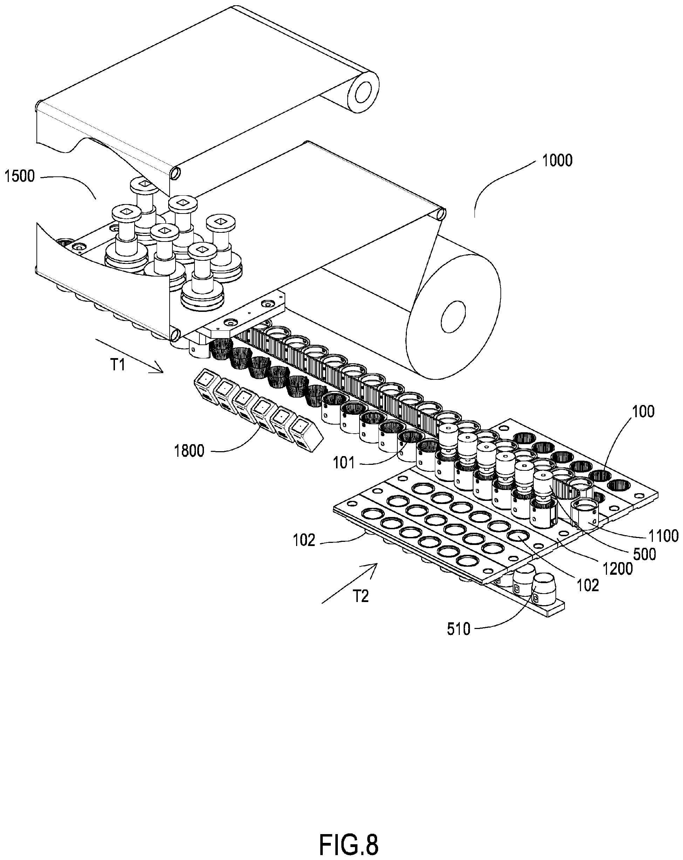

The formed capsule therefore remains housed in the second transport housing 1200 and can be transported through this to a subsequent station of the machine, for example to a station for filling and closing the capsule or to the outlet of the machine, where the ready capsules are accumulated. Figure 8 schematically illustrates a three-dimensional view of a machine for forming capsules 1000 according to a particular embodiment of the present invention.

The machine 1000 comprises a forming station 1500 for forming pleated capsule bodies 101. The forming station 1500 may be like the one described in European patent EP 3 357 819 B1, in particular with reference to the first station 110 and to the moulds 150 of this patent.

The pleated capsule bodies 101 formed in the forming station 1500 are transported from the first transport housings 1100 as far as the welding units 500. The figure shows the advancement direction T1 of the first transport housings provided with the capsule bodies 101 from the forming station 1500 to the welding units 500. After having moved past the welding units 500, the first transport housings 1100 move empty in the direction opposite to T1 so as to return to the forming station 1500. Advantageously, the movement of the first transport housings 1100 is obtained by means of a transport belt defining a closed path of movement of the first transport housings.

As shown in the figure, the machine according to the present invention can advantageously be provided with detection means 1800 for detecting the presence of imperfections of the pleated capsule body 101, as described in European patent EP 3 357 819 B1, in particular with reference to the elements 180 in Figure 3 of this patent.

The figure shows that the machine is provided with six welding units 500, each comprising a welder 520 and a welding housing 510. The number of the welding units 500 may however be any, for example one, two, three, four, five, six or more.

The figure also shows the second transport housings 1200 and their advancement direction T2. In the example shown in the figure, the second transport housings 1200 comprise groups of housings, in which the various groups are joined to form a belt that advances along the direction T2. Each group has a number of housings equal to the number of welding units 500 of the machine 1000, in the case shown in the figure therefore equal to six. This number may vary based on the number of the welding units. Preferably, the second transport housings 1200 form a transport belt defining a closed path of movement of the second transport housings 1200.

The second transport housings 1200 transport the reinforcing elements 102 as far as the welding units 500 and, after moving past the welding units 500, they transport the capsules 100 comprising the welded pleated capsule bodies 101 to the reinforcing elements 102.

As can be seen from the figure, the first transport housings 1100 and the second transport housings 1200 are configured in such a way that, at the welding units 500, the first transport housings 1100 and the second transport housings 1200 are interposed between the welding housing 510 and the welder 520. In particular, the first transport housings 1100 face towards the welder 520 while the second transport housings 1200 face towards the welding housing 510.

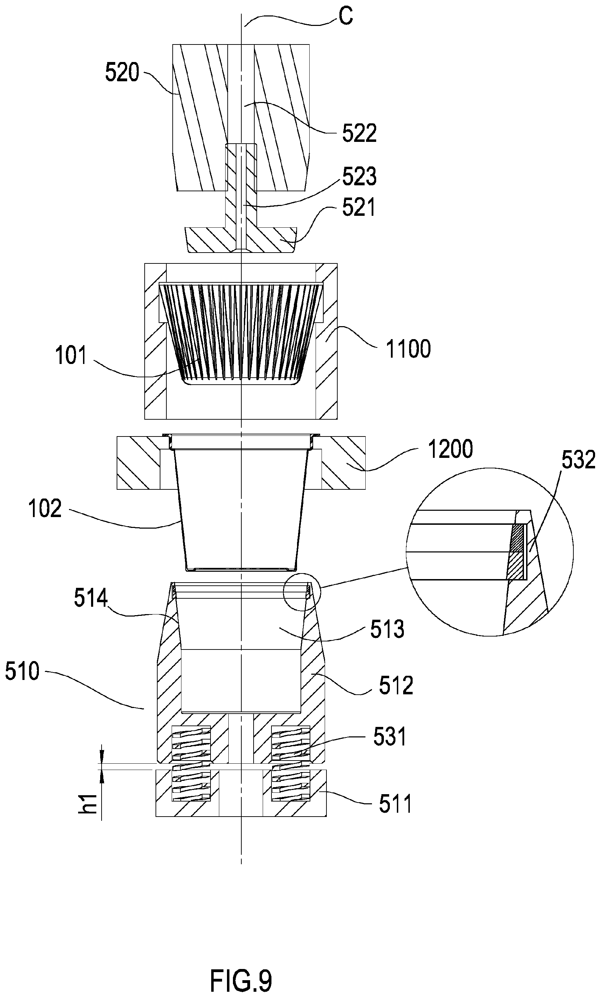

Figure 9 schematically illustrates a sectional view of a welding unit 500 according to a further embodiment of the present invention in an operating step of a machine for forming capsules like those of Figure 2.

The figure shows in particular that the elastic means coupled to the welding housing 510 comprise a pair of circlips 532 placed in the welding housing 510 so that at least one diameter of the welding housing 510 is elastically variable due to the elastic deformation of the circlips 532.

As can be seen in the figure, the pair of circlips 532 is placed in a special groove made in the cavity 513 of the welding housing 510, in particular at the upper end of the cavity 513.

In the configuration shown in Figure 9, in the absence of stresses from the welder 520, the two circlips 532 of the pair are in a rest condition and define a reduced diameter of the cavity 513.

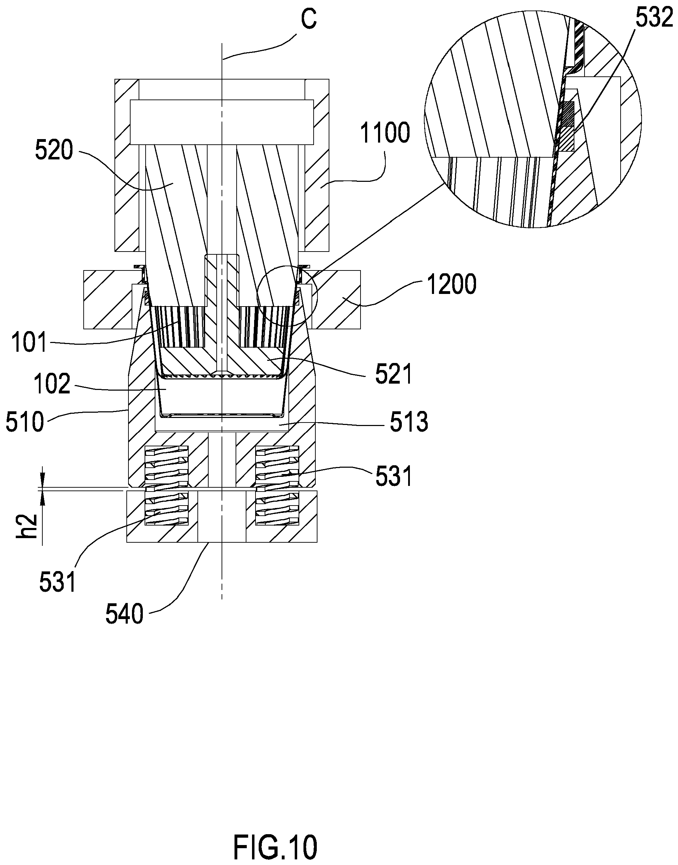

In the subsequent operating step shown in Figure 10, instead, the action of the welder 520 widens the circlips 532 increasing the diameter of the cavity 513 at the rings.

The welding of the capsule body 101 to the reinforcing element 102 therefore takes place at the pair of rings 532, where there is therefore the welding zone due to the contact between the welder 520 and the rings 532, with the capsule body 101 and the reinforcing element 102 interposed.

The orientation of the two circlips 532, made in such a way that the cuts of the two rings do not match, but are rather offset, preferably by 180°, ensures that the welding zone is continuous along the entire perimeter even if, at the cut of each ring, the welding zone tapers off, but is not interrupted.

If, for example, each of the circlips 532 has a height of 5 mm in such a way that the pair of overlapping rings has a height of 10 mm, the welding zone will have a height of 10 mm along the entire perimeter except at the cut of each ring where it tapers off to 5 mm.

Although in the embodiments shown in Figures 9 and 10 the system comprises both the springs 531, like those shown with reference to Figures 3 - 7, and the circlips 532, based on the present invention embodiments may be provided in which only one or more circlips are present, for example a pair of circlips, and not the springs.

As can be easily appreciated by the experts in the sector, the springs like the springs 531 shown with reference to Figures 3 - 7, provide both an adaptation and a thrust in the axial direction, i.e. along the axis of coaxiality C.

The circlips, instead, provide an adaptation and a thrust in the radial direction, perpendicular to the axis of coaxiality C.

The materials and the dimensions, for example of the pleated capsule body and/or of the reinforcing element, may be those described in European patent EP 3 357 819 B1.

Although the present invention has been described with reference to the embodiments described above, it is clear to the person skilled in the art that various modifications, variations and improvements of the present invention can be made in the light of the teaching described above and within the scope of the appended claims without departing from the object and the scope of protection of the invention.

For example, although a linear type machine has been shown in detail, the present invention can also be implemented on carousel or drum type machines.

Furthermore, although a pleated capsule body has always been described, it is clear that the capsule body may be a cup. Examples of capsules that can be formed with the welding unit and/or with the machine based on the present invention are shown in the Community design patent EM03311612. Further, even if a capsule body having a high number of pleats has been shown, such number can also be reduced.

Furthermore, although elastic means in the form of springs or circlips have been shown, according to the present invention the elastic means may also comprise pneumatic devices, i.e. devices whose elastic behaviour can be adjusted by varying the pressure of an actuating fluid. In particular, therefore, according to the present invention, elastic means that impart force thanks to their elasticity can be used, such as for example the springs or the circlips described with reference to Figures 3 - 7 and 9 - 10, respectively. In addition, elastic means that impart force thanks to an external control can also be used, for example pneumatic devices whose action force is adjusted by adjusting the pressure of the actuating fluid.

Finally, those scopes that are considered known to those skilled in the art have not been described in order to avoid unnecessarily overshadowing the described invention.

Consequently, the invention is not limited to the embodiments described above, but is only limited by the scope of protection of the appended claims.

### REFERENCE SIGNS

- 100: Capsule
- 101: Pleated capsule body
- 102: Reinforcing element
- 500: Welding unit
- 510: Welding housing
- 511: First portion of the welding housing
- 512: Second portion of the welding housing
- 513: Cavity
- 514: Side walls
- 520: Welder
- 521: Pusher
- 522: Internal opening of the welder
- 523: Internal opening of the pusher
- 531; 532: Elastic means
- 540: Suction means
- 1000: Machine
- 1100: First transport housings
- 1200: Second transport housings
- 1500: Forming station
- 1800: Detection means
- A: Sucked air
- C: Axis of coaxiality
- D1: Welding housing diameter
- D2: Welder diameter
- h1: Distance between first and second welding housing portion in the absence of thrust
- h2: Distance between first and second welding housing portion under thrust condition
- T1: Direction of advancement of the first transport housings
- T2: Direction of advancement of the second transport housings

## Claims

1. A welding unit (500) for a machine (1000) for forming capsules (100) having a pleated capsule body (101) and a reinforcing element (102), said welding unit (500) comprising:
- a welding housing (510) configured to accommodate said reinforcing element (102) and said pleated capsule body (101) coaxially during welding;
- a welder (520), preferably with fixed geometry, configured to be inserted coaxially with respect to said welding housing (510) within said welding housing (510) and to weld said reinforcing element (102) to said pleated capsule body (101),
wherein said welding housing (510) acts as a counter element for said welder (520) during welding,
**characterised in that:**
said welding unit (500) further comprises:
- elastic means (531; 532) coupled to said welding housing (510) in such a way that said welding housing (510) is elastically movable and/or elastically deformable by the thrust of said welder (520).

2. Welding unit (500) according to claim 1, wherein, during a welding step, as a result of the elastic movement of said welding housing (510) and/or as a result of the elastic deformation of said welding housing (510), at least one diameter (D1) of said welding housing (510) coincides with at least one diameter (D2) of said welder (520) along a welding zone so as to weld said capsule body (101) to said reinforcing element (102) at said diameters (D1, D2).

3. Welding unit (500) according to any one of the preceding claims, wherein said elastic means (531; 532) are configured to elastically vary the position of said welding housing (510) along the axis (C) in which said welder (520) and said welding housing (510) are coaxial, for example said elastic means (531) are placed below said welding housing (510) with respect to said welder (520).

4. Welding unit (500) according to any one of the preceding claims, wherein said elastic means (531; 532) are configured to elastically vary the position of said welding housing (510) in a plane perpendicular to the axis (C) in which said welder (520) and said welding housing are coaxial.

5. Welding unit (500) according to any one of the preceding claims, wherein said elastic means (531; 532) are configured to elastically vary at least one diameter of said welding housing (510), for example said elastic means (532) are placed laterally with respect to said welding housing (510).

6. Welding unit (500) according to any of the preceding claims, wherein said elastic means (531; 532) comprise one or more springs (531).

7. Welding unit (500) according to any one of the preceding claims, wherein said elastic means (531; 532) comprise at least one circlip (532), preferably a pair of circlips (532), placed in said welding housing (510) so that at least one diameter of said welding housing (510) is elastically variable due to the elastic deformation of said circlip (532).

8. Welding unit (500) according to any one of the preceding claims, further comprising suction means (540) configured to suck the interior of said welding housing (510) so as to retain said reinforcing element (102) in said welding housing (510).

9. Welding unit (500) according to any one of the preceding claims, further comprising actuating means configured to move said welding housing (510) and/or said welder (520) so as to insert said welder (520) into said welding housing (510).

10. A machine (1000) for forming capsules (100) having a pleated capsule body (101) and a reinforcing element (102), said machine (1000) comprising one or more welding units (500) according to any one of the preceding claims.

11. Machine (1000) according to claim 10, wherein said machine is of the linear type.

12. Machine (1000) according to any one of claims 10 or 11, comprising transport housings (1100; 1200) configured to position said pleated capsule body (101) and said reinforcing element (102) so that they are coaxial with each other and with respect to said welding housing (510) and said welder (520).

13. Machine (1000) according to claim 12, wherein said transport housings (1100; 1200) are arranged between said welding housing (510) and said welder (520) along the axis (C) of coaxiality.

14. Machine (1000) according to any one of claims 12 or 13, wherein said transport housings (1100; 1200) comprise first transport housings (1100) for transporting said pleated capsule body (101) and second transport housings (1200) for transporting said reinforcing element (102).

15. Machine according to claim 14, wherein said second transport housings (1200) are further configured to accommodate said pleated capsule body (101) and said reinforcing element (102) during welding and to transport the capsule (100) after the welding step has been completed.

16. Method for refurbishing a machine (1000) for forming capsules (100) having a pleated capsule body (101) and a reinforcing element (102), said method comprising the step of providing said machine (1000) with one or more welding units (500) according to any one of claims 1 to 9.

17. Method for refurbishing a machine (1000) for forming capsules (100) having a pleated capsule body (101) and a reinforcing element (102), said machine (1000) comprising one or more welding units (500), each comprising:
- a welding housing (510) configured to accommodate said reinforcing element (102) and said pleated capsule body (101) coaxially during welding;
- a welder (520), preferably with fixed geometry, configured to be inserted coaxially with respect to said welding housing (510) within said welding housing (510) and to weld said reinforcing element (102) to said pleated capsule body (101),
wherein said welding housing (510) acts as a counter element for said welder (520) during welding;
**characterised in that:**
the method comprises the following step:
providing said welding housing (510) with elastic means (531; 532) so that said welding housing (510) is elastically movable and/or elastically deformable by the thrust of said welder (520).

## Patentansprüche

1. Schweiß-Einheit (500) für eine Maschine (1000) zum Herstellen von Kapseln (100) mit einem plissierten Kapselkörper (101) und einem verstärkenden Element (102), wobei die Schweiß-Einheit (500) umfasst:
- ein Schweißgehäuse (510), das so ausgeführt ist, dass es das verstärkende Element (102) und den plissierten Kapselkörper (101) während des Schweißens koaxial aufnimmt;
- ein Schweißaggregat (520), vorzugsweise mit fester Geometrie, das so ausgeführt ist, dass es in Bezug auf das Schweißgehäuse (510) im Inneren des Schweißgehäuses (510) koaxial eingeführt wird und das verstärkende Element (102) an dem plissierten Kapselkörper (101) anschweißt,
wobei das Schweißgehäuse (510) während des Schweißens als ein Gegenelement für das Schweißaggregat (520) wirkt,
**dadurch gekennzeichnet, dass:**
die Schweiß-Einheit (500) des Weiteren umfasst:
- elastische Einrichtungen (531; 532), die mit dem Schweißgehäuse (510) so gekoppelt sind, dass das Schweißgehäuse (510) durch den Schub des Schweißaggregats (520) elastisch bewegt und/oder elastisch verformt werden kann.

2. Schweiß-Einheit (500) nach Anspruch 1, wobei während eines Schweißschritts aufgrund der elastischen Bewegung des Schweißgehäuses (510) und/oder aufgrund der elastischen Verformung des Schweißgehäuses (510) wenigstens ein Durchmesser (D1) des Schweißgehäuses (510) mit wenigstens einem Durchmesser (D2) des Schweißaggregats (520) entlang einer Schweißzone übereinstimmt, und so der Kapselkörper (101) an den Durchmessern (D1, D2) an dem verstärkenden Element (102) angeschweißt wird.

3. Schweiß-Einheit (500) nach einem der vorangehenden Ansprüche, wobei die elastischen Einrichtungen (531; 532) so ausgeführt sind, dass sie die Position des Schweißgehäuses (510) entlang der Achse (C) elastisch ändern, an der das Schweißaggregat (520) und das Schweißgehäuse (510) koaxial sind, beispielsweise die elastischen Einrichtungen (531), unterhalb des Schweißgehäuses (510) in Bezug auf das Schweißaggregat (520) angeordnet sind.

4. Schweiß-Einheit (500) nach einem der vorangehenden Ansprüche, wobei die elastischen Einrichtungen (531; 532) so ausgeführt sind, dass sie die Position des Schweißgehäuses (510) in einer Ebene senkrecht zu der Achse (C) ändern, an der das Schweißaggregat (520) und das Schweißgehäuse koaxial sind.

5. Schweiß-Einheit (500) nach einem der vorangehenden Ansprüche, wobei die elastischen Einrichtungen (531; 532) so ausgeführt sind, dass sie wenigstens einen Durchmesser des Schweißgehäuses (510) ändern, beispielsweise die elastischen Einrichtungen (532) seitlich in Bezug auf das Schweißgehäuse (510) angeordnet sind.

6. Schweiß-Einheit (500) nach einem der vorangehenden Ansprüche, wobei die elastischen Einrichtungen (531; 532) eine oder mehrere Feder/n (531) umfassen.

7. Schweiß-Einheit (500) nach einem der vorangehenden Ansprüche, wobei die elastischen Einrichtungen (531; 532) wenigstens einen Sicherungsring (532), vorzugsweise ein Paar Sicherungsringe (532), umfassen, die so in dem Schweißgehäuse (510) angeordnet sind, dass wenigstens ein Durchmesser des Schweißgehäuses (510) aufgrund der elastischen Verformung des Sicherungsrings (532) elastisch geändert werden kann.

8. Schweiß-Einheit (500) nach einem der vorangehenden Ansprüche, die des Weiteren eine Ansaugeinrichtung (540) umfasst, die so ausgeführt ist, dass sie den Innenraum des Schweißgehäuses (510) ansaugt und so das verstärkende Element (102) in dem Schweißgehäuse (510) hält.

9. Schweiß-Einheit (500) nach einem der vorangehenden Ansprüche, die des Weiteren Betätigungseinrichtungen umfasst, die so ausgeführt sind, dass sie das Schweißgehäuse (510) und/oder das Schweißaggregat (520) bewegen und so das Schweißaggregat (520) in das Schweißgehäuse (510) hinein einführen..

10. Maschine (1000) zum Herstellen von Kapseln (100) mit einem plissierten Kapselkörper (101) und einem verstärkenden Element (102), wobei die Maschine (1000) eine oder mehrere Schweiß-Einheit/en (500) nach einem der vorangehenden Ansprüche umfasst.

11. Maschine (1000) nach Anspruch 10, wobei die Maschine vom linearen Typ ist.

12. Maschine (1000) nach einem der Ansprüche 10 oder 11, die Transportgehäuse (1100; 1200) umfasst, die so ausgeführt sind, dass sie den plissierten Kapselkörper (101) und das verstärkende Element (102) so positionieren, dass sie koaxial zueinander und in Bezug auf das Schweißgehäuse (510) und das Schweißaggregat (520) sind.

13. Maschine (1000) nach Anspruch 12, wobei die Transportgehäuse (1100; 1200) zwischen dem Schweißgehäuse (510) und dem Schweißaggregat (520) entlang der Achse (C) der Koaxialität angeordnet sind.

14. Maschine (1000) nach einem der Ansprüche 12 oder 13, wobei die Transportgehäuse (1100; 1200) erste Transportgehäuse (1100) zum Transportieren des plissierten Kapselkörpers (100) sowie zweite Transportgehäuse (1200) zum Transportieren des verstärkenden Elementes (102) umfassen.

15. Maschine nach Anspruch 14, wobei die Transportgehäuse (1200) des Weiteren so ausgeführt sind, dass sie den plissierten Kapselkörper (101) und das verstärkende Element (102) während des Schweißens aufnehmen und die Kapsel (100) transportieren, nachdem der Schweißschritt abgeschlossen worden ist.

16. Verfahren zum Wiederaufarbeiten einer Maschine (1000) zum Herstellen von Kapseln (100) mit einem plissierten Kapselkörper (101) und einem verstärkenden Element (102), wobei das Verfahren den Schritt umfasst, in dem die Maschine (1000) mit einer oder mehreren Schweiß-Einheit/en (500) nach einem der Ansprüche 1 bis 9 versehen wird.

17. Verfahren zum Wiederaufarbeiten einer Maschine (1000) zum Herstellen von Kapseln (100) mit einem plissierten Kapselkörper (101) und einem verstärkenden Element (102), wobei die Maschine (1000) eine oder mehrere Schweiß-Einheit/en (500) umfasst, die jeweils umfassen:
- ein Schweißgehäuse (510), das so ausgeführt ist, dass es das verstärkende Element (102) und den plissierten Kapselkörper (101) während des Schweißens koaxial aufnimmt;
- ein Schweißaggregat (520), vorzugsweise mit fester Geometrie, das so ausgeführt ist, dass es in Bezug auf das Schweißgehäuse (510) im Inneren des Schweißgehäuses (510) koaxial eingeführt wird und das verstärkende Element (102) an dem plissierten Kapselkörper (101) anschweißt,
wobei das Schweißgehäuse (510) während des Schweißens als ein Gegenelement für das Schweißaggregat (502) wirkt,
**dadurch gekennzeichnet, dass:**
das Verfahren den folgenden Schritt umfasst:
Versehen des Schweißgehäuses (510) mit elastischen Einrichtungen (531; 532), so dass das Schweißgehäuse (510) durch den Schub des Schweißaggregats (520) elastisch bewegt und/oder elastisch verformt werden kann.

## Revendications

1. Unité de soudage (500) pour une machine (1000) de formation de capsules (100) ayant un corps de capsule plissé (101) et un élément de renfort (102), ladite unité de soudage (500) comprenant :
- un boîtier de soudage (510) configuré pour recevoir coaxialement ledit élément de renfort (102) et ledit corps de capsule plissé (101) pendant le soudage ;
- un dispositif de soudage (520), de préférence à géométrie fixe, configuré pour être inséré coaxialement par rapport audit boîtier de soudage (510) à l'intérieur dudit boîtier de soudage (510) et pour souder ledit élément de renfort (102) audit corps de capsule plissé (101),
dans laquelle ledit boîtier de soudage (510) agit comme un contre-élément pour ledit dispositif de soudage (520) pendant le soudage,
**caractérisée en ce que :**
ladite unité de soudage (500) comprend en outre :
- des moyens élastiques (531 ; 532) couplés audit boîtier de soudage (510) de manière à ce que ledit boîtier de soudage (510) soit mobile élastiquement et/ou déformable élastiquement par la poussée dudit dispositif de soudage (520).

2. Unité de soudage (500) selon la revendication 1, dans laquelle, lors d'une étape de soudage, du fait du mouvement élastique dudit boîtier de soudage (510) et/ou du fait de la déformation élastique dudit boîtier de soudage (510), au moins un diamètre (D1) dudit boîtier de soudage (510) coïncide avec au moins un diamètre (D2) dudit dispositif de soudage (520) le long d'une zone de soudage, de manière à souder ledit corps de capsule (101) audit élément de renfort (102) au niveau desdits diamètres (D1, D2).

3. Unité de soudage (500) selon l'une quelconque des revendications précédentes, dans laquelle lesdits moyens élastiques (531 ; 532) sont configurés pour faire varier élastiquement la position dudit boîtier de soudage (510) le long de l'axe (C) selon lequel ledit dispositif de soudage (520) et ledit boîtier de soudage (510) sont coaxiaux, par exemple, lesdits moyens élastiques (531) sont placés en dessous dudit boîtier de soudage (510) par rapport audit dispositif de soudage (520).

4. Unité de soudage (500) selon l'une quelconque des revendications précédentes, dans laquelle lesdits moyens élastiques (531 ; 532) sont configurés pour faire varier élastiquement la position dudit boîtier de soudage (510) dans un plan perpendiculaire à l'axe (C) selon lequel ledit dispositif de soudage (520) et ledit boîtier de soudage sont coaxiaux.

5. Unité de soudage (500) selon l'une quelconque des revendications précédentes, dans laquelle lesdits moyens élastiques (531 ; 532) sont configurés pour faire varier élastiquement au moins un diamètre dudit boîtier de soudage (510), par exemple, lesdits moyens élastiques (532) sont placés latéralement par rapport audit boîtier de soudage (510).

6. Unité de soudage (500) selon l'une des revendications précédentes, dans laquelle lesdits moyens élastiques (531 ; 532) comprennent un ou plusieurs ressorts (531).

7. Unité de soudage (500) selon l'une quelconque des revendications précédentes, dans laquelle lesdits moyens élastiques (531 ; 532) comprennent au moins un circlip (532), de préférence une paire de circlips (532), placés dans ledit boîtier de soudage (510) de sorte qu'au moins un diamètre dudit boîtier de soudage (510) soit élastiquement variable en raison de la déformation élastique dudit circlip (532).

8. Unité de soudage (500) selon l'une quelconque des revendications précédentes, comprenant en outre des moyens d'aspiration (540) configurés pour aspirer l'intérieur dudit boîtier de soudage (510) afin de retenir ledit élément de renfort (102) dans ledit boîtier de soudage (510).

9. Unité de soudage (500) selon l'une quelconque des revendications précédentes, comprenant en outre des moyens d'actionnement configurés pour déplacer ledit boîtier de soudage (510) et/ou ledit dispositif de soudage (520) afin d'insérer ledit dispositif de soudage (520) dans ledit boîtier de soudage (510).

10. Machine (1000) de formation de capsules (100) ayant un corps de capsule plissé (101) et un élément de renfort (102), ladite machine (1000) comprenant une ou plusieurs unités de soudage (500) selon l'une quelconque des revendications précédentes.

11. Machine (1000) selon la revendication 10, dans laquelle ladite machine est du type linéaire.

12. Machine (1000) selon l'une quelconque des revendications 10 ou 11, comprenant des boîtiers de transport (1100 ; 1200) configurés pour positionner ledit corps de capsule plissé (101) et ledit élément de renfort (102) de manière à ce qu'ils soient coaxiaux entre eux et par rapport audit boîtier de soudage (510) et audit dispositif de soudage (520).

13. Machine (1000) selon la revendication 12, dans laquelle lesdits boîtiers de transport (1100 ; 1200) sont agencés entre ledit boîtier de soudage (510) et ledit dispositif de soudage (520) le long de l'axe (C) de coaxialité.

14. Machine (1000) selon l'une quelconque des revendications 12 ou 13, dans laquelle lesdits boîtiers de transport (1100 ; 1200) comprennent des premiers boîtiers de transport (1100) pour le transport dudit corps de capsule plissé (101) et des seconds boîtiers de transport (1200) pour le transport dudit élément de renfort (102).

15. Machine selon la revendication 14, dans laquelle lesdits seconds boîtiers de transport (1200) sont en outre configurés pour recevoir ledit corps de capsule plissé (101) et ledit élément de renfort (102) pendant le soudage et pour transporter la capsule (100) après l'achèvement de l'étape de soudage.

16. Procédé de remise à neuf d'une machine (1000) de formation de capsules (100) ayant un corps de capsule plissé (101) et un élément de renfort (102), ledit procédé comprenant l'étape consistant à doter ladite machine (1000) d'une ou plusieurs unités de soudage (500) selon l'une quelconque des revendications 1 à 9.

17. Procédé de remise à neuf d'une machine (1000) de formation de capsules (100) ayant un corps de capsule plissé (101) et un élément de renfort (102), ladite machine (1000) comprenant une ou plusieurs unités de soudage (500), chacune comprenant :
- un boîtier de soudage (510) configuré pour recevoir coaxialement ledit élément de renfort (102) et ledit corps de capsule plissé (101) pendant le soudage ;
- un dispositif de soudage (520), de préférence à géométrie fixe, configuré pour être inséré coaxialement par rapport audit boîtier de soudage (510) à l'intérieur dudit boîtier de soudage (510) et pour souder ledit élément de renfort (102) audit corps de capsule plissé (101),
dans lequel ledit boîtier de soudage (510) agit comme un contre-élément pour ledit dispositif de soudage (520) pendant le soudage ;
**caractérisé en ce que :**
le procédé comprend l'étape suivante consistant à :
doter ledit boîtier de soudage (510) de moyens élastiques (531 ; 532) de sorte que ledit boîtier de soudage (510) soit mobile élastiquement et/ou déformable élastiquement par la poussée dudit dispositif de soudage (520).
